# EUROPEAN PATENT APPLICATION

(11) **EP 4 030 598 A1**
(43) Date of publication of application: **20.07.2022**
(21) Application number: 20864166.2
(22) Date of filing: 07.09.2020
(51) Int. Cl.: H02K 13/00

(54) **ELECTRIC MOTOR AND ELECTRICAL EQUIPMENT**

(30) Priority: 10.09.2019 JP 2019164797
(71) Applicant: Panasonic Intellectual Property Management Co., Ltd., Osaka-shi, Osaka 540-6207 (JP)
(72) Inventor: NAKANO, Keisaku, Osaka-shi, Osaka 540-6207 (JP); ASANO, Takahiro, Osaka-shi, Osaka 540-6207 (JP); YORINO, Tomoko, Osaka-shi, Osaka 540-6207 (JP); TOYA, Kazuo, Osaka-shi, Osaka 540-6207 (JP)
(74) Representative: SSM Sandmair
(86) International application number: PCT/JP2020/033755
(87) International publication number: WO 2021/049452

(57) **Abstract**

An electric motor (1) includes a rotor (20), a commutator (30), a first conducting brush (41), a second conducting brush (42), a first auxiliary brush (51), and a second auxiliary brush (52). The rotor (20) has a shaft (21). The commutator (30) is attached to the shaft (21). The first conducting brush (41) and the second conducting brush (42) are in contact with the commutator (30). The first auxiliary brush (51) and the second auxiliary brush (52) are in contact with the commutator (30). The commutator (30) includes commutator segments (31) provided in a circumferential direction of the shaft (21). The first auxiliary brush (51) is disposed so as to come into contact with a commutator segment (31) having the same electric potential as a commutator segment (31) just separated from the first conducting brush (41), among the commutator segments (31). The second auxiliary brush (52) is disposed so as to come into contact with a commutator segment (31) having the same electric potential as a commutator segment (31) just separated from the second conducting brush (42), among the commutator segments (31).

## Description

### [Technical Field]

The present disclosure relates to an electric motor and electrical equipment.

### [Background Art]

Electric motors are used in various products, such as the motor fan of a vacuum cleaner. A commutator motor including brushes and a commutator and a brushless motor not including brushes or a commutator are known as electric motors.

The commutator motor includes, for example, a stator, a rotor, a commutator, and conducting brushes. The rotor is rotated by the magnetic force of the stator. The commutator is attached to the rotation shaft of the rotor. The conducting brushes are in slidable contact with the commutator. The commutator includes commutator segments evenly spaced apart in a circumferential direction of the rotation shaft of the rotor. The commutator segments are electrically connected to winding coils wound around a rotor core.

In the commutator motor, the conducting brushes and commutator energize the winding coils wound around the rotor. In this case, when an energizing-target winding coil is changed with rotation of the commutator, a spark may occur between a conducting brush and a commutator segment. Since such sparking accelerates the wear of the conducting brush, the lifespan of the electric motor decreases.

To suppress a spark and extend the lifespan of a conducting brush, a technique of providing an auxiliary brush connected to an electronic component capable of absorbing arc voltage due to sparking has been proposed (e.g., Patent Literature (PTL) 1 to 3).

### [Citation List]

### [Patent Literature]

[PTL 1] Japanese Unexamined Patent Application Publication No. 2013-179807
[PTL 2] Japanese Unexamined Patent Application Publication No. 2011-4582
[PTL 3] Japanese Patent No. 6512981

### [Summary of Invention]

### [Technical Problem]

In the technique disclosed in PTL 1, however, a conducting brush and an auxiliary brush are located near each other. Thus, brush wear debris may accumulate between the conducting brush and the auxiliary brush, which may cause abnormal sparking and wear the conducting bush. In addition, brush wear debris may stick to the conducting brush, which may stop the conducting brush from traveling and cause energization failure. This may hinder the longer lifespan of an electric motor. In addition, as in the electric motor disclosed in PTL 1, if a pair of auxiliary brushes are far apart from each other, such a positional relation complicates the installation of a wire to be connected to the pair of the auxiliary brushes, which may hinder the miniaturization of the electric motor.

In the technique disclosed in PTL 2, a conducting brush and an auxiliary brush are combined into one component. However, the conducting brush and the auxiliary brush wear at different rates. Thus, either of the conducting brush and the auxiliary brush may fail to come into contact with a commutator segment, that is, contact failure may occur. This may hinder the longer lifespan of an electric motor.

In the technique disclosed in PTL 3, a conducting brush and an auxiliary brush are at different positions in a direction of the shaft axis of a shaft. Thus, commutator segments have a long length in the direction of the shaft axis of the shaft. This may hinder the miniaturization of an electric motor.

Thus, in the conventional commutator motors including auxiliary brushes, it is difficult to achieve both a longer lifespan and miniaturization.

In view of the foregoing, the present disclosure aims to provide an electric motor and electrical equipment including the electric motor, the electric motor being an electric motor in which both a longer lifespan and miniaturization are achieved even if auxiliary brushes are used.

### [Solution to Problem]

To achieve the aims, an aspect of an electric motor according to the present disclosure includes: a rotor having a rotation shaft; a commutator attached to the rotation shaft; conducting brushes in contact with the commutator; and auxiliary brushes in contact with the commutator. The commutator includes commutator segments provided in a circumferential direction of the rotation shaft. The conducting brushes include a first conducting brush and a second conducting brush. The auxiliary brushes include a first auxiliary brush and a second auxiliary brush. The first auxiliary brush is disposed so as to come into contact with a commutator segment having the same electric potential as a commutator segment just separated from the first conducting brush, among the commutator segments, the same electric potential being a first electric potential. The second auxiliary brush is disposed so as to come into contact with a commutator segment having the same electric potential as a commutator segment just separated from the second conducting brush, among the commutator segments, the same electric potential being a second electric potential.

In addition, an aspect of electrical equipment according to the present disclosure is electrical equipment including the above electric motor.

### [Advantageous Effects of Invention]

In the present disclosure, even if the auxiliary brushes are used, both a longer lifespan and miniaturization can be achieved.

### [Brief Description of Drawings]

[FIG. 1]

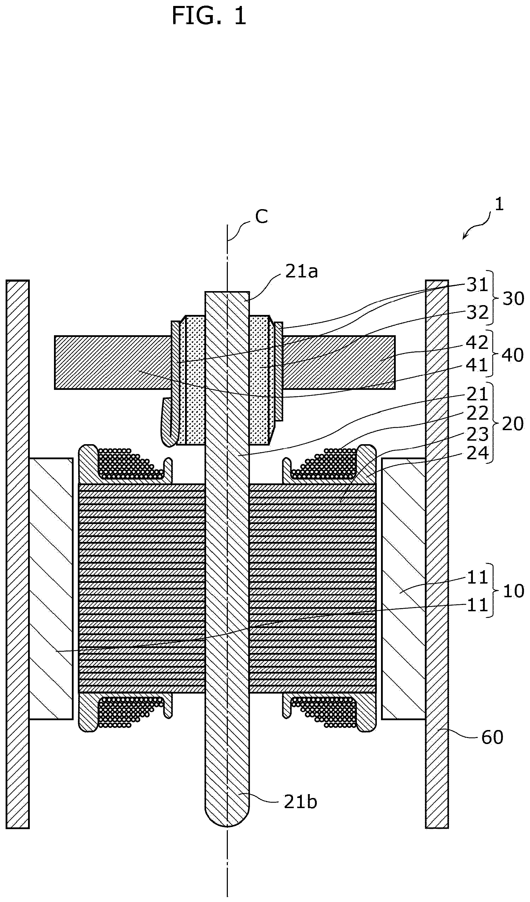

   FIG. 1 is a cross-sectional view of an electric motor according to an embodiment.
[FIG. 2]

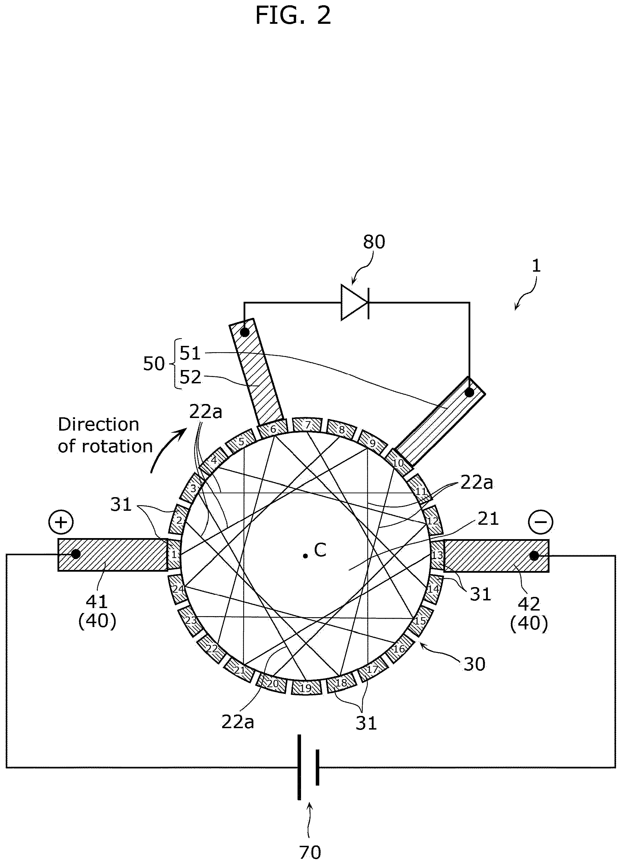

   FIG. 2 schematically illustrates connections between commutator segments by voltage equalization lines and an example of an arrangement of conducting brushes and auxiliary brushes, in the electric motor according to the embodiment.
[FIG. 3]

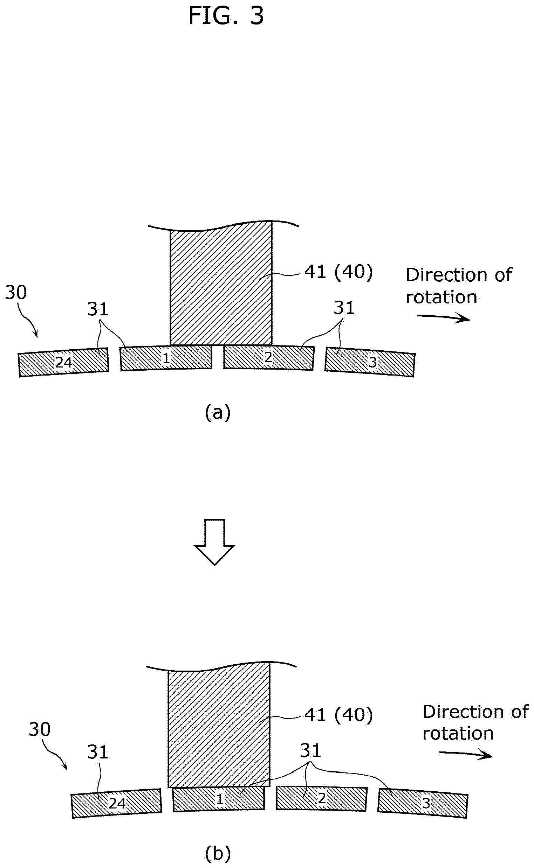

   FIG. 3 illustrates that rotation of a commutator enables sliding contact between a conducting brush and commutator segments.
[FIG. 4]

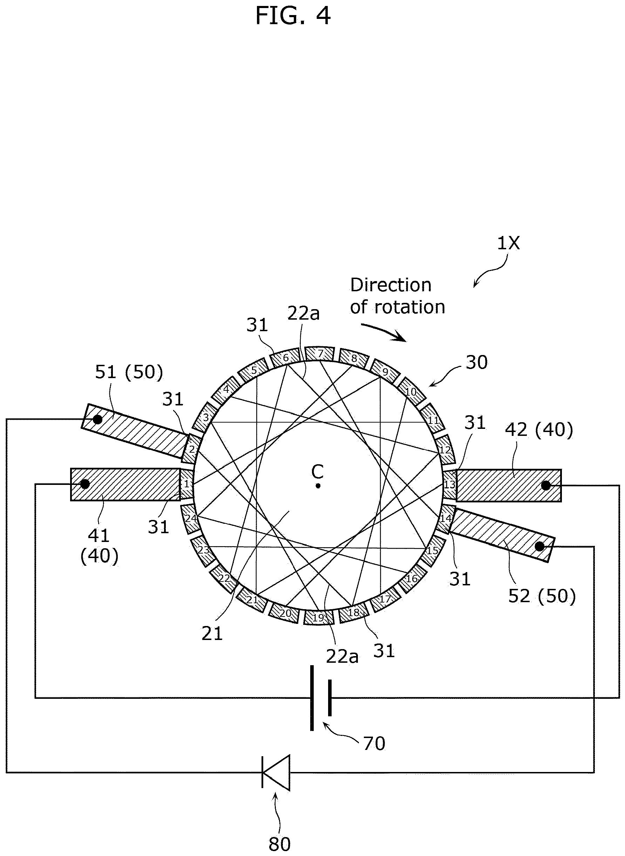

   FIG. 4 schematically illustrates connections between commutator segments by voltage equalization lines and an example of an arrangement of conducting brushes and auxiliary brushes, in an electric motor according to a comparative example.
[FIG. 5]

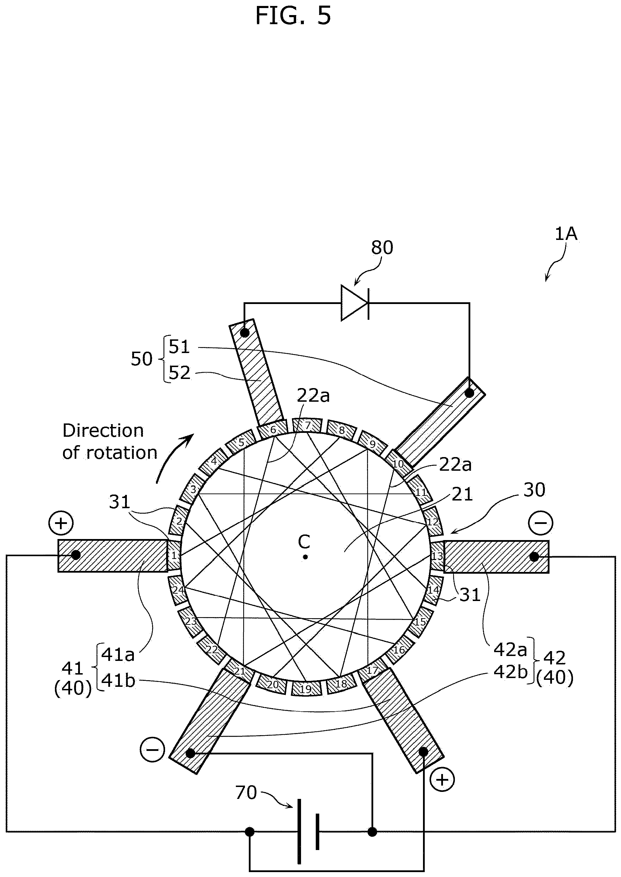

   FIG. 5 schematically illustrates connections between commutator segments by voltage equalization lines and an example of an arrangement of conducting brushes and auxiliary brushes, in an electric motor according to a variation.

### [Description of Embodiment]

Hereinafter, an embodiment of the present disclosure is described with reference to the drawings. It should be noted that the embodiment described below is a specific example of the present disclosure. Thus, for example, the numerical values, shapes, materials, structural elements, arrangements and connections of the structural elements are mere examples and therefore do not limit the present disclosure. Accordingly, among the structural elements described in the embodiment below, the structural elements not recited in the independent claims are described as optional structural elements.

It should be noted that the drawings are schematic views and are not necessarily precisely drawn. In addition, in the drawings, the same reference symbol is assigned to substantially the same structural elements, and overlapping explanations are omitted or simplified.

### (Embodiment)

The overall configuration of electric motor 1 according to an embodiment is described with reference to FIGS. 1 and 2. FIG. 1 is a cross-sectional view of electric motor 1 according to the embodiment. FIG. 2 schematically illustrates connections between commutator segments 31 by voltage equalization lines 22a and an example of an arrangement of conducting brushes 40 and auxiliary brushes 50, in electric motor 1 according to the embodiment.

Electric motor 1 is a commutator motor, and as illustrated in FIGS. 1 and 2, electric motor 1 includes stator 10, rotor 20, commutator 30, conducting brushes 40, auxiliary brushes 50, and frame 60. Rotor 20 is rotated by the magnetic force of stator 10. Commutator 30 is attached to shaft 21 of rotor 20. Conducting brushes 40 and auxiliary brushes 50 are in contact with commutator 30. Frame 60 houses stator 10 and rotor 20.

Electric motor 1 in the embodiment is a direct-current (DC) motor powered by direct current and includes magnets 11 as stator 10 and an armature having winding coils 22, as rotor 20.

It should be noted that electric motor 1 in the embodiment can be used in various electrical equipment. For instance, electric motor 1 can be used in the motor fans of, for example, a vacuum cleaner and a hand dryer. Electric motor 1 can also be used in, for example, automotive electrical and electronic equipment and a power tool. Hereinafter, the structural elements of electric motor 1 are described in detail.

Stator 10 generates magnetic force that will act on rotor 20. In stator 10, a north magnetic pole and a south magnetic pole or alternating north and south magnetic poles are present in a circumferential direction of stator 10 on a plane of an air gap between stator 10 and rotor 20. In the embodiment, stator 10 is made up of magnets 11. Magnets 11 are field magnets that generate magnetic flux to produce torque and, for instance, permanent magnets having north and south poles. In a plan view, each magnet 11 is arc-shaped and has a substantially uniform thickness. Magnets 11 are fixed to frame 60.

Magnets 11 of stator 10 are arranged so that a north pole and a south pole are present in the circumferential direction of stator 10 or alternating north and south poles are evenly present in the circumferential direction of stator 10. Thus, the direction of main magnetic flux generated by stator 10 (magnets 11) intersects a direction of shaft axis C of shaft 21. In the embodiment, magnets 11 are evenly spaced apart in the circumferential direction of stator 10 so as to surround rotor 20. Thus, magnets 11 are outside the outer circumference of rotor 20 in the radial direction of rotor core 23 of rotor 20. Specifically, magnets 11 magnetized with north and south poles are disposed so that the magnetic pole center(s) of the north pole(s) and the magnetic pole center(s) of the south pole(s) are evenly spaced apart in the circumferential direction.

Rotor 20 generates magnetic force that will act on stator 10. In the embodiment, the direction of main flux generated by rotor 20 intersects the direction of shaft axis C of shaft 21. Rotor 20 has shaft 21 as a rotation shaft. Rotor 20 is an armature and has winding coils 22 and rotor core 23. In the embodiment, rotor 20 is an inner rotor and is disposed inside stator 10. Specifically, rotor 20 is surrounded by magnets 11 of stator 10. In addition, an airgap is present between rotor 20 and stator 10. Specifically, a very small air gap is present between the periphery of rotor 20 (rotor core 23) and the inner surfaces of magnets 11.

Shaft 21 is a rotation shaft having shaft axis C and a long bar-like component around which rotor 20 rotates. A longitudinal direction of shaft 21 (direction in which shaft 21 extends) is identical to the direction of shaft axis C (shaft-axis direction). Shaft 21 is rotatably held by a bearing. Although details are not illustrated, for instance, first end portion 21a, one of the end portions of shaft 21, is supported by a first bearing held by a bracket fixed to frame 60 or directly held by frame 60. Second end portion 21b, the other end portion of shaft 21, is supported by a second bearing held by a bracket fixed to frame 60 or directly held by frame 60. The brackets are fixed to frame 60 so as to cover the openings of frame 60, for example.

Shaft 21 is fixed to the center of rotor 20. Shaft 21 is, for example, a metal bar and is fixed to rotor core 23, passing through rotor core 23. For instance, shaft 21 is fixed to rotor core 23 by press-fitting or shrink-fitting shaft 21 into the center hole of rotor core 23.

Winding coils 22 (rotor coils) are wound so that magnetic force that will act on stator 10 is generated when a current flows. Winding coils 22 are wound around rotor core 23 with insulator 24 interposed therebetween. Insulator 24 is made of, for example, an insulating resin material and provides electrical insulation between winding coils 22 and rotor core 23. Winding coil 22 is provided for each slot of rotor 20 and electrically connected to commutator 30. Specifically, winding coils 22 are electrically connected to commutator segments 31 of commutator 30.

Rotor core 23 is a stack of magnetic steel sheets stacked in the longitudinal direction of shaft 21. Rotor core 23 has, for example, teeth. Winding coil 22 is wound around each of the teeth. That is, more than one winding coil 22 is provided. It should be noted that rotor core 23 is not limited to a stack of magnetic steel sheets and may be a bulk body made of a magnetic material.

Commutator 30 is attached to shaft 21. Thus, when rotor 20 rotates, commutator 30 rotates together with shaft 21. In the embodiment, commutator 30 is attached to first end portion 21a of shaft 21.

As illustrated in FIG. 2, commutator 30 includes commutator segments 31. Commutator segments 31 are provided in a circumferential direction of shaft 21. Specifically, commutator segments 31 are evenly spaced apart and arranged into a ring so as to surround shaft 21. In the embodiment, commutator 30 includes 24 commutator segments 31.

As illustrated in FIG. 1, commutator segments 31 extend in the longitudinal direction of shaft 21. Commutator segments 31 are conductive terminals made of a metal material, such as copper, and are electrically connected to winding coils 22 of rotor 20. As an example, commutator 30 is a mold commutator, and commutator segments 31 are resin-molded. In this case, commutator segments 31 are embedded in mold resin 32 so that the surfaces of commutator segments 31 are exposed.

Although being insulated and isolated from each other, commutator segments 31 are electrically connected to each other. For instance, although not illustrated in FIG. 2, two adjacent commutator segments 31 are connected to each other by winding coil 22 (each commutator segment 31 is connected to their adjacent commutator segments 31 by winding coils 22). In the embodiment, by using voltage equalization line 22a, at least two commutator segments 31 among commutator segments 31 are electrically connected to each other so as to have the same electric potential (equal voltage). Specifically, commutator segments 31 include commutator-segment sets each of which includes at least three commutator segments 31 having the same electric potential because of voltage equalization line 22a. In the embodiment, commutator 30 includes 24 commutator segments 31 and eight commutator-segment sets each of which includes three commutator segments 31 having the same electric potential because of voltage equalization line 22a. In FIG. 2, voltage equalization lines 22a are illustrated by the straight lines within the area surrounded by commutator segments 31. In the embodiment, three commutator segments 31 between which seven commutator segments 31 are interposed are connected to each other by voltage equalization line 22a so as to have the same electric potential. Specifically, in the case of 24 commutator segments 31, voltage equalization line 22a connects one commutator segment 31 to another commutator segment 31 located eight commutator segments away and still another commutator segment 31 located 16 commutator segments away.

As an example, as illustrated in FIG. 2, 1 to 24 numbers are allocated to 24 commutator segments 31 in the direction of rotation of commutator 30. First commutator segment 31 is connected to 9th commutator segment 31 by voltage equalization line 22a, and 9th commutator segment 31 is connected to 17th commutator segment 31 by voltage equalization line 22a. In addition, second commutator segment 31 is connected to 18th commutator segment 31 by voltage equalization line 22a, and 10th commutator segment 31 is connected to 18th commutator segment 31 by voltage equalization line 22a. Likewise, third commutator segment 31 is connected to 11th commutator segment 31 and 19th commutator segment 31 by voltage equalization line 22a. It should be noted that the same applies to other commutator segments 31.

Voltage equalization line 22a and winding coil 22 (main winding) provided for each slot of rotor 20 are formed as one wire. That is, one conducting wire is used without being cut to form voltage equalization line 22a and winding coil 22. In this case, voltage equalization line 22a may be a portion of a connecting portion (jumper wire) of the conducting wire, the connecting portion connecting two winding coils 22 to each other. Alternatively, before winding winding coil 22, a portion of the conducting wire may be used as voltage equalization line 22a. Otherwise, after winding winding coil 22, a remaining portion of the conducting wire may be used as voltage equalization line 22a.

Conducting brushes 40 and auxiliary brushes 50 are in contact with commutator 30. Specifically, conducting brushes 40 and auxiliary brushes 50 are in slidable contact with commutator segments 31 of commutator 30. Although not illustrated, conducting brushes 40 and auxiliary brushes 50 are held by brush holders. For instance, each of conducting brushes 40 and auxiliary brushes 50 is housed in a brush holder. In this case, conducting brushes 40 and auxiliary brushes 50 are slidable inside the respective brush holders. Although not illustrated, electric motor 1 includes brush springs, such as coil springs or torsion springs, for pressing conducting brushes 40 and auxiliary brushes 50 against commutator 30. Using spring elasticity, the brush springs apply pressing force to conducting brushes 40 and auxiliary brushes 50. Conducting brushes 40 and auxiliary brushes 50 receive the pressing force, and thus the surface of an end of each brush is constantly in contact with commutator segment 31 of commutator 30. The surfaces on which each of conducting brushes 40 and auxiliary brushes 50 comes into contact with each of commutator segments 31 serve as sliding surfaces. It should be noted that the brush springs are provided, one for each of conducting brushes 40 and auxiliary brushes 50. However, the number of brush springs is not limited to the example.

Conducting brushes 40 and auxiliary brushes 50 are electric conductors having conductivity. As an example, conducting brushes 40 and auxiliary brushes 50 are long, substantially cuboid-shaped carbon brushes. Specifically, conducting brushes 40 and auxiliary brushes 50 are carbon brushes containing metal, such as copper. For instance, graphite powder, copper powder, binder resin, and a curative agent are kneaded, and a kneaded object is ground and compression-molded into cuboids, which are then baked to form conducting brushes 40 and auxiliary brushes 50.

Conducting brushes 40 are power-supply brushes that supply power to rotor 20 by coming into contact with commutator 30. Specifically, an end of conducting brush 40 comes into contact with commutator segment 31 of commutator 30. Conducting brush 40 is connected to an electrical wire through which a current supplied by power source 70 flows. For instance, conducting brush 40 is electrically connected to an electrode terminal that receives power from power source 70, via an electrical wire, such as a pigtail wire. Specifically, one of the end portions of the pigtail wire is connected to the electrode terminal, and the other end portion is connected to the trailing end portion of conducting brush 40. When conducting brush 40 comes into contact with commutator segments 31, an armature current supplied to conducting brush 40 through the pigtail wire flows through commutator segments 31, which then flows through winding coils 22 of rotor 20.

A state in which conducting brush 40 extends over and is in contact with two adjacent commutator segments 31 is possible. That is, the width of conducting brush 40 in the direction of rotation of rotor 20 is greater than a gap between two adjacent commutator segments 31. This enables conducting brush 40 to short-circuit winding coil 22 connected between two adjacent commutator segments 31.

For instance, as illustrated in (a) in FIG. 3, conducting brush 40 is in contact with both first and second commutator segments 31 adjacent to each other. This state changes with rotation of commutator 30 caused by rotation of rotor 20. As illustrated in (b) in FIG. 3, conducting brush 40 has separated from second commutator segment 31 and is in contact with only first commutator segment 31, which is one of two adjacent commutator segments 31 and behind second commutator segment 31 in the direction of rotation. Thus, it is possible to short-circuit winding coil 22 installed in a wire path between first and second commutator segments 31.

As illustrated in FIG. 2, more than one conducting brush 40 is provided in the embodiment. Each conducting brush 40 is in contact with commutator 30. Specifically, more than one conducting brush 40 includes first conducting brush 41 and second conducting brush 42 as a pair of conducting brushes 40. First conducting brush 41 and second conducting brush 42 face each other, sandwiching commutator 30. That is, first conducting brush 41 and second conducting brush 42 are disposed so as to be symmetric with respect to shaft axis C of shaft 21. First conducting brush 41 and second conducting brush 42 are in contact with commutator segments 31 of commutator 30 in a direction perpendicular to shaft axis C of shaft 21 (radial direction). First conducting brush 41 and second conducting brush 42 are connected to power source 70. In the embodiment, power source 70 is a direct-current power source. As an example, first conducting brush 41 is an anode-side brush, and second conducting brush 42 is a cathode-side brush.

Auxiliary brush 50 is a spark-suppressing brush for suppressing a spark that has occurred due to separation of conducting brush 40 and commutator segment 31. In the embodiment, auxiliary brush 50 is not connected to the electrical wire through which a current supplied by power source 70 flows. That is, a current supplied by power source 70 does not directly flow through auxiliary brush 50. Instead, a portion of a current supplied by power source 70 flows through auxiliary brush 50 after flowing through conducting brush 40 and commutator segments 31.

In the embodiment, more than one auxiliary brush 50 is provided. Each auxiliary brush 50 is in contact with commutator 30. Specifically, more than one auxiliary brush 50 includes first auxiliary brush 51 and second auxiliary brush 52 as a pair of auxiliary brush 50. First auxiliary brush 51 and second auxiliary brush 52 are in contact with commutator 30.

First auxiliary brush 51 and second auxiliary brush 52 are electrically connected to each other via diode 80. That is, diode 80 is inserted in a wire path between first auxiliary brush 51 and second auxiliary brush 52. Specifically, one of the terminals of diode 80 is connected to first auxiliary brush 51, and the other terminal is connected to second auxiliary brush 52. First auxiliary brush 51 and second auxiliary brush 52 are connected to diode 80 by a wire, such as a conducting wire.

Auxiliary brush 50 is disposed so as to come into contact with commutator segment 31 having the same electric potential (equal voltage) as another commutator segment 31 in which a spark may occur due to separation from conducting brush 40.

Specifically, first auxiliary brush 51 is disposed so as to come into contact with commutator segment 31 (equal-voltage segment) having the same electric potential as commutator segment 31 just separated from first conducting brush 41 of conducting brushes 40, among commutator segments 31, the same electric potential being a first electric potential. In the embodiment, first auxiliary brush 51 is disposed so as to come into contact with only commutator segment 31 having the same electric potential as commutator segment 31 just separated from first conducting brush 41.

For instance, as illustrated in FIG. 2, first conducting brush 41 has separated from second commutator segment 31 and is in contact with only first commutator segment 31. In this situation, first auxiliary brush 51 is disposed to so as to come into contact with 10th commutator segment 31 having the same electric potential as second commutator segment 31 just separated from first conducting brush 41.

Likewise, second auxiliary brush 52 is disposed so as to come into contact with commutator segment 31 having the same electric potential as commutator segment 31 just separated from second conducting brush 42 of conducting brushes 40, among commutator segments 31, the same electric potential being a second electric potential. In the embodiment, second auxiliary brush 52 is disposed so as to come into contact with only commutator segment 31 having the same electric potential as commutator segment 31 just separated from second conducting brush 42.

For instance, as illustrated in FIG. 2, second conducting brush 42 has separated from 14th commutator segment 31 and is in contact with only 13th commutator segment 31. In this situation, second auxiliary brush 52 is disposed so as to come into contact with 6th commutator segment 31 having the same electric potential as 14th commutator segment 31 just separated from second conducting brush 42.

In the embodiment, when the following situations happen simultaneously: first conducting brush 41 comes into contact with just one commutator segment 31; and second conducting brush 42 comes into contact with just one commutator segment 31, the following situations happen simultaneously: first auxiliary brush 51 comes into contact with only commutator segment 31 having the same electric potential as commutator segment 31 just separated from first conducting brush 41; and second auxiliary brush 52 comes into contact with only commutator segment 31 having the same electric potential as commutator segment 31 just separated from second conducting brush 42.

It should be noted that the first electric potential of commutator segment 31 in contact with first auxiliary brush 51 may be different from or the same as the second electric potential of commutator segment 31 in contact with second auxiliary brush 52.

In the embodiment, there are three commutator segments 31 having the same electric potential that is the first electric potential, and there are three commutator segments 31 having the same electric potential that is the second electric potential. In this case, first auxiliary brush 51 and second auxiliary brush 52 are in contact with commutator segments 31 so as to be located near each other.

Specifically, second auxiliary brush 52 is in contact with commutator segment 31 closest in a circumferential direction of rotor 20 to commutator segment 31 in contact with first auxiliary brush 51, among three commutator segments 31 having the same electric potential that is the second electric potential. In addition, first auxiliary brush 51 is in contact with commutator segment 31 closest in the circumferential direction of rotor 20 to commutator segment 31 in contact with second auxiliary brush 52, among three commutator segments 31 having the same electric potential that is the first electric potential.

For instance, in FIG. 2, commutator segments 31 having the same electric potential as second commutator segment 31 just separated from first conducting brush 41 are 10th and 18th commutator segments 31. Commutator segments 31 having the same electric potential as 14th commutator segment 31 just separated from second conducting brush 42 are sixth and 22nd commutator segments 31. First auxiliary brush 51 and second auxiliary brush 52 are in contact with commutator segments 31 so that the distance between first auxiliary brush 51 and second auxiliary brush 52 in the circumferential direction is shortest. That is, first auxiliary brush 51 is not in contact with 18th commutator segment 31 but in contact with 10th commutator segment 31. Second auxiliary brush 52 is not in contact with 22nd commutator segment 31 but in contact with sixth commutator segment 31.

It should be noted that also by disposing first auxiliary brush 51 and second auxiliary brush 52 so that first auxiliary brush 51 is in contact with 18th commutator segment 31 and second auxiliary brush 52 is in contact with 22nd commutator segment 31, the distance between first auxiliary brush 51 and second auxiliary brush 52 is shortest.

Conducting brushes 40 and auxiliary brushes 50 arranged in this manner are positioned on the same plane. Specifically, conducting brushes 40 and auxiliary brushes 50 are positioned on the same plane perpendicular to the direction of shaft axis C of shaft 21. In the embodiment, first conducting brush 41, second conducting brush 42, first auxiliary brush 51, and second auxiliary brush 52 are positioned on the same plane inside frame 60 without being at different positions in the direction of shaft axis C of shaft 21.

Frame 60 is a case housing the parts of electric motor 1, such as stator 10 and rotor 20. Frame 60 has, for example, a hollow cylindrical portion. Frame 60 is made of a metal material, such as aluminum. Stator 10 (magnets 11) are attached to frame 60 along the inner surface of frame 60. It should be noted that frame 60 may be a hollow cylindrical part having a bottom.

In electric motor 1 having the above configuration, as an armature current (driving current), a current supplied to conducting brush 40 flows through commutator 30 and then through winding coils 22 of rotor 20, which generates magnetic flux in rotor 20. Mutual interaction between the magnetic flux generated in rotor 20 and magnetic flux generated in stator 10 generates magnetic force, which will be torque that causes rotor 20 to rotate. The direction in which a current flows is changed according to the positional relationship when commutator segment 31 and conducting brush 40 come into contact with each other. That is, commutation occurs. Because of the change in the direction in which the current flows, the repulsion and attraction of magnetic force are generated between stator 10 and rotor 20. Thus, turning force in a constant direction is produced. This enables rotor 20 to rotate around shaft 21.

Hereinafter, the characteristics of electric motor 1 according to the embodiment are described, and the background that led to the technique in the present disclosure is also explained.

In a commutator motor, an auxiliary brush is disposed in addition to a conducting brush, and the auxiliary brush is electrically connected to an electronic component capable of absorbing arc voltage due to sparking. This is to extend the lifespan of the conducting brush by suppressing a spark that has occurred between the conducting brush and a commutator segment.

For instance, in electric motor 1X in the comparative example illustrated in FIG. 4, a pair of auxiliary brushes 50 connected to diode 80 are provided to suppress a spark that has occurred between conducting brush 40 and commutator segment 31. Electric motor 1X in the comparative example illustrated in FIG. 4 and electric motor 1 according to the embodiment are different only in terms of where auxiliary brushes 50 are disposed. Specifically, in electric motor 1X in the comparative example, auxiliary brush 50 is disposed so as to come into contact with commutator segment 31 just separated from conducting brush 40.

In the configuration of electric motor 1X in the comparative example illustrated in FIG. 4, conducting brush 40 and auxiliary brush 50 are disposed near each other. Thus, brush wear debris may accumulate between conducting brush 40 and auxiliary brush 50, which may cause abnormal sparking and wear conducting brush 40. In addition, brush wear debris may stick to conducting brush 40, which may stop conducting brush 40 from traveling and cause energization failure. This may hinder the longer lifespan of electric motor 1X. In addition, in electric motor 1X in the comparative example illustrated in FIG. 4, a pair of auxiliary brushes 50 are far apart from each other. That is, first auxiliary brush 51 and second auxiliary brush 52 are far apart from each other. This complicates the installation of the wire to be connected to first auxiliary brush 51 and second auxiliary brush 52, which may hinder the miniaturization of electric motor 1X.

In addition, an electric motor in which a conducting brush and an auxiliary brush are combined into one component has been proposed. However, the conducting brush and the auxiliary brush wear at different rates. Thus, if a conducting brush and an auxiliary brush are combined into one component, either of the conducting brush and the auxiliary brush may fail to come into contact with a commutator segment, that is, contact failure may occur. This may hinder the longer lifespan of the electric motor.

In addition, an electric motor in which a conducting brush and an auxiliary brush are disposed at different positions in a direction of the shaft axis of a shaft has been proposed. In such an arrangement, however, commutator segments have a long length in the direction of the shaft axis of the shaft. This may hinder the miniaturization of the electric motor.

As described above, in the conventional techniques, it is difficult to achieve both the longer lifespan and miniaturization of a commutator motor including auxiliary brushes.

In view of this, through diligent research, the inventors of the present application found that by disposing auxiliary brushes at certain positions, it is possible to achieve both the longer lifespan and miniaturization of a commutator motor including the auxiliary brushes.

Specifically, in electric motor 1 according to the embodiment, as illustrated in FIG. 2, each auxiliary brush 50 is disposed so as to come into contact with commutator segment 31 having the same electric potential (equal voltage) as another commutator segment 31 in which a spark may occur due to separation from conducting brush 40.

More specifically, first auxiliary brush 51 is disposed so as to come into contact with commutator segment 31 having the same electric potential as commutator segment 31 just separated from first conducting brush 41, among commutator segments 31. Likewise, second auxiliary brush 52 is disposed so as to come into contact with commutator segment 31 having the same electric potential as commutator segment 31 just separated from second conducting brush 42, among commutator segments 31.

In the arrangement, when a spark occurs between conducting brush 40 and commutator segment 31 just separated from conducting brush 40, since auxiliary brush 50 is in contact with commutator segment 31 having the same electric potential as commutator segment 31 just separated from conducting brush 40, it is possible to suppress the spark by using auxiliary brush 50. That is, diode 80 connected to auxiliary brush 50 can absorb arc voltage due to sparking.

Specifically, a spark that has occurred between first conducting brush 41 and commutator segment 31 can be suppressed by using first auxiliary brush 51 in contact with commutator segment 31 having the same electric potential as commutator segment 31 just separated from first conducting brush 41. In addition, a spark that has occurred between second conducting brush 42 and commutator segment 31 can be suppressed by using second auxiliary brush 52 in contact with commutator segment 31 having the same electric potential as commutator segment 31 just separated from second conducting brush 42.

In electric motor 1 according to the embodiment, a spark is absorbed by using auxiliary brush 50 in contact with commutator segment 31 having the same electric potential as another commutator segment 31 in which the spark has occurred due to separation from conducting brush 40. Thus, it is possible to provide a sufficient distance between conducting brush 40 and auxiliary brush 50. Specifically, it is possible to provide a sufficient distance between first conducting brush 41 and first auxiliary brush 51 and a sufficient distance between second conducting brush 42 and second auxiliary brush 52.

Thus, it is possible to suppress a spark that has occurred between conducting brush 40 and commutator segment 31, by using auxiliary brush 50. At the same time, it is possible to provide a sufficient distance between conducting brush 40 and auxiliary brush 50, which enables conducting brush 40 and auxiliary brush 50 to be sufficiently apart.

This can avoid abnormal sparking due to accumulation of brush wear debris between conducting brush 40 and auxiliary brush 50 and clogging caused by brush wear debris. In addition, it is possible to avoid energization failure that occurs when brush wear debris sticks to conducting brush 40 and thus conducting brush 40 is stopped from traveling. Moreover, it is possible to avoid wearing of auxiliary brush 50 due to sparking in conducting brush 40. Thus, it is possible to suppress the longer lifespan of electric motor 1 from being hindered.

In addition, first auxiliary brush 51 and second auxiliary brush 52 can be disposed near each other, which can simplify the installation of the wire to be connected to first auxiliary brush 51 and second auxiliary brush 52. Thus, it is possible to miniaturize electric motor 1.

In electric motor 1 according to the embodiment, even if auxiliary brushes 50 are used, both a longer lifespan and miniaturization can be achieved.

In electric motor 1 according to the embodiment, first auxiliary brush 51 and second auxiliary brush 52 are electrically connected to each other via diode 80.

This enables diode 80 to absorb arc voltage due to sparking between conducting brush 40 and commutator segment 31. Thus, it is possible to effectively suppress conducting brush 40 from wearing due to sparking, which can suppress the lifespan of conducting brush 40 from being reduced. Accordingly, the longer lifespan of electric motor 1 can be archived.

In electric motor 1 according to the embodiment, second auxiliary brush 52 is in contact with commutator segment 31 closest in the circumferential direction of rotor 20 to commutator segment 31 in contact with first auxiliary brush 51, among three commutator segments 31 having the same electric potential that is the second electric potential. Likewise, first auxiliary brush 51 is in contact with commutator segment 31 closest in the circumferential direction of rotor 20 to commutator segment 31 in contact with second auxiliary brush 52, among three commutator segments 31 having the same electric potential that is the first electric potential.

That is, first auxiliary brush 51 (second auxiliary brush 52) is disposed so as to come into contact with commutator segment 31 having the same electric potential as another commutator segment 31 in which a spark may occur due to separation from first conducting brush 41 (second conducting brush 42). While the above condition is met, first auxiliary brush 51 and second auxiliary brush 52 are disposed so that the distance between commutator segment 31 in contact with first auxiliary brush 51 and commutator segment 31 in contact with second auxiliary brush 52 is shortest.

This can shorten the length of the wire installed to connect first auxiliary brush 51 and second auxiliary brush 52 to each other. Accordingly, it is possible to miniaturize electric motor 1, that is, it is possible to make a compact motor. In addition, in electric motor 1 according to the embodiment, the wire between first auxiliary brush 51 and second auxiliary brush 52 does not cross the wire (power line) between conducting brushes 40 and power source 70, which can reduce the risk of a short circuit between the wires.

### (Variation)

In electric motor 1 according to the present disclosure is described above on the basis of the embodiment. However, the present disclosure is not limited to the descriptions in the above embodiment.

For instance, in the embodiment, commutator 30 includes commutator-segment sets each of which includes three commutator segments having the same electric potential because of voltage equalization line 22a. However, the number of commutator segments having the same electric potential is not limited to the example. Specifically, the number of commutator segments having the same electric potential may be two or at least four. That is, the number of commutator segments having the same electric potential is at least two.

In the embodiment, two conducting brushes 40 and two auxiliary brushes 50 are provided. However, the number of conducting brushes 40 and the number of auxiliary brushes 50 are not limited to the example. For instance, as illustrated in electric motor 1A in FIG. 5, four conducting brushes 40 may be provided for two auxiliary brushes 50. Specifically, in electric motor 1A in FIG. 5, first conducting brush 41, which is an anode-side brush, includes first first conducting brush 41a and second first conducting brush 41b. Second conducting brush 42, which is a cathode-side brush, includes first second conducting brush 42a and second second conducting brush 42b. Electric motor 1A in FIG. 5 includes second first conducting brush 41b and second second conducting brush 42b, which are not included in electric motor 1 in FIG. 2. It should be noted that instead of providing four conducting brushes 40, five or more conducting brushes 40 may be provided.

Thus, even if four or more conducting brushes 40 are used, two auxiliary brushes 50 are sufficient. That is, by using the technique in the present disclosure, it is possible that the number of conducting brushes 40 surpasses that of auxiliary brushes 50. The details are described hereinafter.

When the number of conducting brushes is doubled, sparking in one brush is reduced by half, which can significantly extend the lifespans of the conducting brushes. However, in a configuration of a conventional electric motor including auxiliary brushes, the number of auxiliary brushes and the number of diodes have to be increased with the increase in the number of conducting brushes. In electric motor 1A in FIG. 5, on the other hand, although diode 80 is connected between a pair of auxiliary brushes 50, each auxiliary brush 50 is disposed so as to come into contact with commutator segment 31 having the same electric potential as another commutator segment 31 in which a spark may occur due to separation from conducting brush 40. Accordingly, even if the number of conducting brushes 40 is increased to extend the lifespan, the number of auxiliary brushes 50 and the number of diodes 80 do not have to be increased. Thus, it is possible to suppress the electric motor from being upsized with the increase in the number of auxiliary brushes 50 and the number of diodes 80. That is, a compact electric motor having a longer lifespan can be made.

It should be noted that a combination of the number of conducting brushes 40 and the number of auxiliary brushes 50 is not limited to the example illustrated in FIG. 5. Specifically, under the condition that commutator segments 31 include commutator-segment sets each of which includes n commutator segments having the same electric potential, the number of conducting brushes 40 may be 2(n - 1), where n is a natural number greater than or equal to two. In this case, it is preferable that n be at least three (n ≥ 3). That is, it is preferable that the number of commutator segments 31 having the same electric potential be at least three. In this case, even if 2(n - 1) conducting brushes 40 are provided, it is preferable that just two auxiliary brushes 50 be provided. That is, even if the number of conducting brushes 40 increases (n increases), it is preferable that just two auxiliary brushes 50 be provided (the number of auxiliary brushes 50 should not be increased).

In the embodiment, stator 10 is made up of magnets 11. However, the configuration of stator 10 is not limited to the example. For instance, stator 10 may have a stator core and winding coils wound around the stator core.

In the embodiment, rotor 20 has a core. However, rotor 20 does not have to have a core. That is, electric motor 1 in the embodiment is also applicable to a coreless motor, or a motor without a core. For instance, electric motor 1 in the embodiment is applicable to a coreless motor that is a flat motor in which the magnetic flux of stator 10 and the magnetic flux of rotor 20 are generated in the direction of shaft axis C of shaft 21.

The present disclosure includes an embodiment obtained by making various changes envisioned by those skilled in the art to the above embodiment and an embodiment obtained by optionally combining the structural elements and functions thereof in the embodiment within the scope of the present disclosure.

### [Industrial Applicability]

The present disclosure is applicable to various products including an electric motor, such as a vacuum cleaner and an automobile.

### [Reference Signs List]

- 1, 1A: electric motor
- 10: stator
- 11: magnet
- 20: rotor
- 21: shaft
- 21a: first end portion
- 21b: second end portion
- 22: winding coil
- 22a: voltage equalization line
- 23: rotor core
- 24: insulator
- 30: commutator
- 31: commutator segment
- 32: mold resin
- 40: conducting brush
- 41: first conducting brush
- 41a: first first conducting brush
- 41b: second first conducting brush
- 42: second conducting brush
- 42a: first second conducting brush
- 42b: second second conducting brush
- 50: auxiliary brush
- 51: first auxiliary brush
- 52: second auxiliary brush
- 60: frame
- 70: power source
- 80: diode

## Claims

1. An electric motor, comprising:
a rotor having a rotation shaft;
a commutator attached to the rotation shaft;
a plurality of conducting brushes in contact with the commutator; and
a plurality of auxiliary brushes in contact with the commutator,
wherein the commutator includes a plurality of commutator segments provided in a circumferential direction of the rotation shaft,
the plurality of conducting brushes include a first conducting brush and a second conducting brush,
the plurality of auxiliary brushes include a first auxiliary brush and a second auxiliary brush,
the first auxiliary brush is disposed so as to come into contact with a commutator segment having a same electric potential as a commutator segment just separated from the first conducting brush, among the plurality of commutator segments, the same electric potential being a first electric potential, and
the second auxiliary brush is disposed so as to come into contact with a commutator segment having a same electric potential as a commutator segment just separated from the second conducting brush, among the plurality of commutator segments, the same electric potential being a second electric potential.

2. The electric motor according to claim 1,
wherein the first auxiliary brush and the second auxiliary brush are electrically connected to each other via a diode.

3. The electric motor according to claim 1 or 2,
wherein the plurality of commutator segments include at least three commutator segments having the same electric potential that is the first electric potential and at least three commutator segments having the same electric potential that is the second electric potential, and
the second auxiliary brush is in contact with a commutator segment closest in a circumferential direction of the rotor to a commutator segment in contact with the first auxiliary brush, among the at least three commutator segments having the same electric potential that is the second electric potential.

4. The electric motor according to any one of claims 1 to 3,
wherein under a condition that the plurality of commutator segments include commutator-segment sets each of which includes n commutator segments having a same electric potential, a total number of the plurality of conducting brushes is 2(n - 1), where n is a natural number greater than or equal to two.

5. Electrical equipment comprising the electric motor according to any one of claims 1 to 4.
